# EUROPÄISCHE PATENTSCHRIFT

(11) **EP 2 807 732 B1**
(45) Veröffentlichungstag und Bekanntmachung des Hinweises auf die Patenterteilung: **29.07.2020**
(21) Anmeldenummer: 13710984.9
(22) Anmeldetag: 06.03.2013
(51) Int. Cl.: H02K 9/193, H02K 17/16

(54) **ELEKTRISCHE MASCHINE MIT EINEM ROTOR ZUR KÜHLUNG DER ELEKTRISCHEN MASCHINE**
ELECTRICAL MACHINE HAVING A ROTOR FOR COOLING THE ELECTRICAL MACHINE
MACHINE ÉLECTRIQUE ET ROTOR POUR REFROIDIR LA MACHINE ÉLECTRIQUE

(30) Priorität: 08.03.2012 DE 102012203697
(43) Veröffentlichungstag der Anmeldung: 03.12.2014
(73) Patentinhaber: Siemens Aktiengesellschaft, 80333 München (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(86) Internationale Anmeldenummer: PCT/EP2013/054492
(87) Internationale Veröffentlichungsnummer: WO 2013/131949

(56) Entgegenhaltungen:
- EP-A1- 0 824 287
- EP-A2- 2 254 221
- JP-A- H02 197 237
- US-A- 3 562 564
- US-B1- 6 191 511

## Beschreibung

Die Erfindung betrifft eine elektrische Maschine, insbesondere eine Asynchronmaschine, mit einem Rotor zur Kühlung der elektrischen Maschine. Des Weiteren betrifft die Erfindung ein Kühlsystem zur Kühlung einer elektrischen Maschine und ein Fahrzeug, das ein Kühlsystem zur Kühlung einer elektrischen Maschine umfasst.

Eine elektrische Maschine wird zur Energiewandlung von elektrischer in mechanische Energie und umgekehrt eingesetzt.

Bei der Energieumwandlung von mechanischer in elektrische Energie wird die elektrische Maschine als Generator eingesetzt.

Bei der Energiewandlung von elektrischer in mechanische Energie wird die elektrische Maschine als Motor eingesetzt.

In beiden Fällen möchte man einen hohen Wirkungsgrad bei einer hohen Leistungsdichte erreichen. Der hohe Wirkungsgrad ist notwendig, um Energie kostengünstig und ressourcenschonend anbieten zu können. Eine hohe Leistungsdichte ist notwendig, da man elektrische Maschinen mit geringerem Materialeinsatz kostengünstiger fertigen möchte oder aufgrund gewichtsensibler Anwendungen der elektrischen Maschine diese mit einer geringeren Masse bauen möchte.

Beispiele für gewichtsensible Anwendungen sind Anwendungen, bei denen die Tragstruktur für die elektrische Maschine kostspielig ist, oder die elektrische Maschine in der Anwendung von einem Ort zu einem anderen Ort transportiert wird.

Als zwei Beispiele für gewichtssensible Anwendungen seien hier Windkraftanlagen oder elektrisch angetriebene Fahrzeuge genannt.

US 6,191,511 B1 offenbart eine elektrische Maschine gemäß dem Oberbegriff des Anspruchs 1.

Um einen hohen Wirkungsgrad bei einer hohen Leistungsdichte zu erreichen, werden die Prinzipien und die Konstruktionen der elektrischen Maschinen sowie deren Kühlung verbessert.

Der Erfindung liegt daher die Aufgabe zugrunde, eine elektrische Maschine mit einer Möglichkeit zur effizienten Kühlung zur Verfügung zu stellen.

Diese Aufgabe wird durch eine elektrische Maschine mit den Merkmalen nach Anspruch 1 gelöst.

Die erfindungsgemäße elektrische Maschine, welche insbesondere eine Asynchronmaschine ist, umfasst
- einen Stator,
- einen um eine Drehachse drehbar gelagerten Rotor, der im Betrieb der elektrische Maschine mit dem Stator magnetisch zusammenwirkt,
- eine Welle, auf der der Rotor befestigt ist, und die eine axiale Bohrung aufweist,
- ein Zuflusselement, das sich so in die axiale Bohrung erstreckt, dass eine Kühlflüssigkeit aus dem Zuflusselement in die axiale Bohrung fließen kann, sowie weitere Merkmale, wie später beschrieben.

Diese Aufgabe wird auch durch ein Kühlsystem mit den Merkmalen nach Anspruch 7 gelöst.

Das erfindungsgemäße Kühlsystem umfasst eine erfindungsgemäße elektrische Maschine und einen Kühlmittelkreislauf zum Transportieren der Kühlflüssigkeit durch die axiale Bohrung. Ferner wird die Aufgabe durch ein Fahrzeug nach Anspruch 8 gelöst. Das erfindungsgemäße Fahrzeug umfasst ein erfindungsgemäßes Kühlsystem.

Eine erfindungsgemäße elektrische Maschine weist einen Stator und einen um eine Drehachse drehbar gelagerten Rotor auf. Der Rotor ist auf einer Welle befestigt; die Welle ist mithilfe von Lagern im Gehäuse der elektrischen Maschine drehbar gelagert. Als Lager können z.B. Gleitlager oder Wälzlager eingesetzt werden. Bei Wälzlagern erfolgt die drehbare Lagerung über Wälzkörper, die zwischen einem Innen- und einem Außenring angeordnet sind. Der Innenring ist dabei auf der Welle angeordnet und der Außenring ist im Gehäuse der elektrischen Maschine so angeordnet, dass die Welle drehbar im Gehäuse gelagert ist. Bei einem Kugellager sind z.B. die Wälzkörper Kugeln. Um die Reibung zwischen dem Innenring und den Wälzkörpern bzw. dem Außenring und den Wälzkörpern zu verringern, können Schmiermittel eingesetzt werden.

Bei dem Wälzlager dreht sich der Außenring relativ zum Innenring. Es können dabei Schmiermittel eingesetzt werden, um die Reibung zwischen Außen- und Innenring zu verringern.

Bei einem Betrieb der elektrischen Maschine kann der Rotor in Drehung versetzt werden, und es wird durch das magnetische Zusammenwirken zwischen Rotor und Stator mechanische in elektrische Energie umgewandelt. Die elektrische Energie kann an einer Wicklung im Stator durch Anschließen eines elektrischen Verbrauchers entnommen werden.

Bei einem Betrieb der elektrischen Maschine kann auch über eine Wicklung des Stators elektrische Energie zugeführt werden und durch das magnetische Zusammenwirken zwischen Stator und Rotor in mechanische Energie umgewandelt werden. Dabei wird der Rotor in Drehung versetzt und es kann an der Welle mechanische Energie an einen mechanischen Verbraucher in Form einer Drehbewegung abgegeben werden.

Um ein magnetisches Zusammenwirken zwischen Stator und Rotor bei einem Betrieb der elektrischen Maschine zu ermöglichen, weist der Rotor Permanentmagnete auf, oder er weist eine Wicklung auf, mit der ein Magnetfeld erzeugt werden kann. Die Wicklung des Rotors kann aus mehreren Windungen oder - wie im Fall eines Asynchronmotors - aus einer Windung bestehen. Die Wicklung kann mit einem elektrischen Stromkreis verbunden sein, oder kurzgeschlossen sein. Ein Beispiel für eine elektrische Maschine mit einer kurzgeschlossenen Wicklung auf dem Rotor ist eine Asynchronmaschine mit einem Käfigläufer, wobei der Käfigläufer die Funktion eines Rotors hat.

Der Stator kann mehrere Wicklungen aufweisen, die in einer Umfangsrichtung am Stator angeordnet sind. Mit den Wicklungen kann in einem Betrieb der elektrischen Maschine ein magnetisches Drehfeld bewirkt werden. Bei der Verwendung der elektrischen Maschine als Motor, d.h. zur Energiewandlung von elektrischer Energie in mechanische Energie, können die Wicklungen phasenverschoben mit elektrischer Energie versorgt werden, um so in einfacher Weise den Rotor in eine Drehbewegung zu versetzen. Die Ansteuerung der Wicklungen kann durch Entnahme der elektrischen Energie aus einem Drehstromnetz oder aus einem Umrichter erfolgen. Ein Umrichter ermöglicht die Ansteuerung der Wicklungen des Stators mit beliebigem Phasenversatz und verschiedenen Frequenzen der elektrischen Ströme bzw. Spannungen, so dass die Drehzahl der Welle im Betrieb der elektrischen Maschine verändert werden kann.

Der Rotor kann auch mehrere Wicklungen aufweisen, wenn dies zum magnetischen Zusammenwirken mit dem Stator notwendig ist, oder zum Starten eines Betriebs der elektrischen Maschine, zum Aufrechterhalten eines Betriebs oder zu einem Anhalten der elektrischen Maschine notwendig ist.

Bei einer Verwendung einer elektrischen Maschine als Generator können dieselben Anordnungen von Wicklungen wie bei einer elektrischen Maschine, die als Motor verwendet wird, eingesetzt werden.

Um eine effiziente Kühlung der elektrischen Maschine zu erreichen, weist die Welle eine axiale Bohrung auf. Unter "axial" wird dabei eine Richtung entlang der Drehachse der Welle verstanden. Durch ein Zuflusselement, das sich in die axiale Bohrung erstreckt, kann ein Kühlmittel in die axiale Bohrung fließen. So ist es erfindungsgemäß vorgesehen, bei der elektrischen Maschine eine effiziente Kühlung durch Verwendung einer Kühlflüssigkeit als Kühlmittel zu erreichen. Die Verwendung einer Kühlflüssigkeit ermöglicht im Vergleich zur Kühlung mit einem Gas, z.B. Luft, aufgrund der höheren Wärmekapazität eine verbesserte Abführung von einer in der elektrischen Maschine erzeugten Abwärme.

Weiterhin vorteilhaft an der erfindungsgemäßen elektrischen Maschine ist, dass das Zuflusselement und die axiale Bohrung eine effiziente Kühlung der elektrischen Maschine durch eine Kühlflüssigkeit ermöglichen, ohne dass die Kühlflüssigkeit mit Teilen der elektrischen Maschine in Berührung kommt, die im Betrieb der elektrischen Maschine einen elektrischen Strom führen. Ein Kontakt der Kühlflüssigkeit mit stromführenden Bestandteilen der elektrischen Maschine würde den Betrieb der elektrischen Maschine beeinträchtigen oder diese gar zerstören, da die Kühlflüssigkeiten in der Regel eine gewisse elektrische Leitfähigkeit aufweisen.

Weiterhin wird vermieden, dass eine Kühlflüssigkeit aufgrund ihrer Masse die Drehbewegung des Rotors im Betrieb der elektrischen Maschine behindert. Dies wäre z.B. der Fall, wenn sich die Kühlflüssigkeit zwischen Rotor und Stator befände.

Außerdem ist es vorteilhaft, eine elektrische Maschine mit einem Zuflusselement und einer axialen Bohrung in der Welle zu versehen, wenn ein Rotoraufbau der elektrischen Maschine zu einer erhöhten Erwärmung des Rotors im Betrieb, insbesondere bei einem bestimmten Betriebszustand, führt. Ein Betriebszustand mit erhöhter Erwärmung des Rotors kann z.B. bei einem Betriebsbeginn, bei einer Betriebsphase, die eine erhöhte Energieabgabe erfordert, oder am Betriebsende der elektrischen Maschine auftreten.

So ist es insbesondere bei einer Asynchronmaschine vorteilhaft, wenn diese die Welle mit der axialen Bohrung aufweist, und sich das Zuflusselement in die axiale Bohrung erstreckt, so dass der Rotor erfindungsgemäß durch eine Kühlflüssigkeit gekühlt werden kann.

Ein erfindungsgemäßes Kühlsystem weist neben den bereits angeführten Vorteilen unter anderem auch den Vorteil auf, dass die Kühlung einer erfindungsgemäßen elektrischen Maschine unabhängig von ihrem Betrieb oder Betriebszustand mit einem Kühlmittel gekühlt werden kann.

Ein erfindungsgemäßes Fahrzeug weist neben den bereits angeführten Vorteilen unter anderem auch den Vorteil auf, dass bei einem ruhenden Fahrzeug oder bei einem Fahrzeug mit einer verminderten Geschwindigkeit eine für die elektrische Maschine geringere bzw. nicht vorhandene Kühlung durch einen Fahrtwind mithilfe einer Kühlung durch das Kühlsystem kompensiert werden kann. Dies ist dadurch möglich, dass das Kühlsystem mit einer erfindungsgemäßen elektrischen Maschine auch einen ruhenden Rotor kühlen kann, indem das Kühlmittel unabhängig von der Drehzahl des Rotors, d.h. unabhängig von einem Betrieb der elektrischen Maschine, durch das Zuflusselement und die axiale Bohrung des Rotors transportiert werden kann. Dies gilt auch für den Fall, dass die elektrische Maschine zum Antrieb des Fahrzeugs genutzt wird.

Vorteilhafte Ausgestaltungen der Erfindung sind in den abhängigen Ansprüchen angegeben. Auch weitere erfindungswesentliche Merkmale werden im Folgenden erwähnt.

Die erfindungsgemäße elektrische Maschine umfasst einen Raum, der an einem offenen Ende der Welle so angeordnet ist, dass die Kühlflüssigkeit aus der axialen Bohrung in den Raum fließen kann, und der Raum in axialer Richtung durch eine axiale Berandung begrenzt ist, die eine spiralförmige Führung der Kühlflüssigkeit um die Drehachse in einen Kühlmittelaustritt ermöglicht. Die Kühlflüssigkeit erfährt durch die Drehung des Rotors in einem Betrieb der elektrischen Maschine einen Drall. Der Drall wird durch die axiale Berandung vorteilhaft genutzt, um die Kühlflüssigkeit entlang der axialen Berandung in den Kühlmittelaustritt zu führen. Somit ist keine oder eine geringere Energie notwendig, damit die Kühlflüssigkeit durch die elektrische Maschine, insbesondere den Rotor, fließen kann. Es wird somit eine effizientere Kühlung der elektrischen Maschine erreicht.

Die Ausgestaltung ermöglicht auch bei elektrischen Maschinen, die in beiden Drehrichtungen um die Drehachse betrieben werden, eine effiziente Kühlung. Ein Betrieb der elektrischen Maschine erfolgt in einer bestimmten Anwendung in der Regel zu einem größeren zeitlichen Anteil in einer der beiden Drehrichtungen. Die axiale Berandung kann so ausgeführt sein, dass die axiale Berandung für die Drehrichtung miL dem größeren zeitlichen Anteil eine spiralförmige Führung der Kühlflüssigkeit um die Drehachse in einen Kühlmittelaustritt ermöglicht.

Die axiale Berandung liegt in axialer Richtung auf einer der axialen Bohrung gegenüberliegenden Seite des Raums, um dort den Raum in der Weise zu begrenzen, dass die Kühlflüssigkeit den Raum an der gegenüberliegenden Seite nicht in axialer Richtung verlassen kann.

Der Kühlmittelaustritt kann in einer radialen Berandung des Raumes angebracht sein, damit die axiale Berandung die Kühlflüssigkeit mit Unterstützung der Fliehkraft in den Kühlmittelaustritt führt.

Der Kühlmittelaustritt kann sich durch einen Ausschnitt in einer radialen Berandung des Raumes in den Raum erstrecken. So kann die Kühlflüssigkeit durch die axiale Berandung ohne Unterstützung durch die Fliehkraft in den Kühlmittelaustritt geführt werden.

In einer weiteren vorteilhaften Ausgestaltung einer erfindungsgemäßen elektrischen Maschine weist das Zuflusselement eine axiale Öffnung auf. So kann die Kühlflüssigkeit axial parallel zur Drehachse in den Raum oder die axiale Bohrung eintreten.

In einer erfindungsgemäßen Ausgestaltung einer erfindungsgemäßen elektrischen Maschine weist das Zuflusselement ein Einlassrohr auf, das sich in die axiale Bohrung erstreckt.

Insbesondere erstreckt sich das Einlassrohr so weit in die axiale Bohrung, dass bei einer Kühlung mit der Kühlflüssigkeit die Kühlflüssigkeiten aus dem Zuflusselement in der Nähe von Komponenten fließt, die in der Umgebung eines zweiten Endes angebracht sind, welches dem offenen Ende der Welle axial gegenüberliegt nahezu genauso gut gekühlt werden, wie die Komponenten, die sich in der Nähe des offenen Endes der Welle befinden. Dies sind Komponenten, die einer Kühlung bedürfen, da sie bei einer zu starken Erwärmung zu einer elektrischen oder mechanischen Fehlfunktion der elektrischen Maschine führen. Als Beispiel für eine Komponente, deren Erwärmung eine mechanische Fehlfunktion zur Folge haben kann, sei das Lager zur Lagerung des Rotors am zweiten Ende der Welle angeführt. Als Beispiel für eine Komponente, deren Erwärmung zu einer elektrischen Fehlfunktion führen kann, sei eine Wicklung des Rotors angeführt.

Wenn sich das Einlassrohr weit in die axiale Bohrung erstrecken soll, wird dies vorteilhaft in einfacher Weise dadurch erreicht, dass das Zuflusselement als Einlassrohr ausgebildet ist.
Erfindungsgemäß ist die axiale Bohrung in der Nähe des zweiten Endes verschlossen. Das zweite Ende ist dann ein verschlossenes Ende. Dies ermöglicht, dass die Kühlflüssigkeit bei einer Kühlung der elektrischen Maschine durch das Einlassrohr bis zu dem verschlossenen Ende der axialen Bohrung und von dort durch einen Kanal die axiale Bohrung am offenen Ende der Welle verlassen kann, wobei der Kanal durch eine Berandung der axialen Bohrung und eine äußere Oberfläche des Einlassrohrs gebildet wird. Erfindungsgemäß bildet die äußere Oberfläche des Einlassrohrs mit der Berandung der axialen Bohrung einen hohlzylinderförmigen Kanal. Der hohlzylinderförmige Kanal, durch den die Kühlflüssigkeit nach dem Umlenken fließt, erstreckt sich am Ende der Welle in einen Raum, der ein zum hohlzylinderförmigen Kanal konzentrischen hohlzylinderförmigen Raum ist, um die aus der axialen Bohrung fließende Kühlflüssigkeit aufzunehmen. Dabei kann sich der Kühlmittelaustritt zumindest mit einem Teil seines Querschnitts durch einen Ausschnitt einer radialen Berandung des hohlzylinderförmigen Raums in den hohlzylinderförmigen Raum erstrecken. So kann die Kühlflüssigkeit, durch die axiale Berandung in den Kühlmittelaustritt ohne Unterstützung durch die Fliehkraft geführt werden. Die Kühlflüssigkeit verlässt den hohlzylinderförmigen Raum über den Kühlmittelaustritt.

Es wurde festgestellt, dass eine erfindungsgemäße elektrische Maschine mit zunehmender Drehzahl des Rotors der fließenden Kühlflüssigkeit keinen größeren Widerstand entgegensetzt, sondern sich der Widerstand sogar verringert.

So ist es möglich, eine erfindungsgemäße elektrische Maschine bei einer hohen Drehzahl des Rotors, insbesondere im Bereich von ca. 4000 U/min bis 20.000 U/min effizient zu kühlen. Aufgrund der hohen Drehzahl des Rotors kann die elektrische Maschine bei einem kleinen Bauraum eine große Leistung abgeben. Die Kühlflüssigkeit wird in Abhängigkeit vom Kühlbedarf der elektrischen Maschine durch das Einlassrohr in die axiale Bohrung gepumpt. Aufgrund der Erkenntnis, dass die erfindungsgemäße elektrische Maschine mit zunehmender Drehzahl des Rotors, insbesondere bei hohen Drehzahlen, in der Kühlflüssigkeit einen geringeren Druckverlust hervorruft, kann die Kühlflüssigkeit von dem offenen Ende der axialen Bohrung bis zu dem weit entfernten zweiten verschlossenen Ende fließen, dort umgelenkt werden und wieder zu dem offenen Ende der Welle zurückfließen, ohne dass dies bei hohen Drehzahlen zu einem höheren Energieeinsatz für das Pumpen der Kühlflüssigkeit führt. Somit ist eine effiziente Kühlung der elektrischen Maschine möglich. Aufgrund der geringeren Druckverluste ist auch eine kostengünstige Konstruktion möglich, da die Kühlflüssigkeit nur von einer Seite in die drehbar gelagerte Welle ein- bzw. ausfließt.

Das Einlassrohr kann aufgrund seiner einfachen Form kostengünstig hergestellt werden. Auch im Stillstand des Motors, d.h. wenn der Rotor nicht bewegt wird, kann die Kühlflüssigkeit ungehindert durch das Einlassrohr und die axiale Bohrung gepumpt werden und es wird somit im Stillstand der elektrischen Maschine eine effiziente Kühlmöglichkeit zur Verfügung gestellt.

In einer weiteren vorteilhaften Ausgestaltung einer erfindungsgemäßen elektrischen Maschine ist eine äußere Oberfläche des Einlassrohrs eine glatte Oberfläche. Aufgrund der geringeren Reibung zwischen der Kühlflüssigkeit und der äußeren Oberfläche des Einlassrohrs wird die Kühlung in ihrer Effizienz zusätzlich verbessert.

Dies kann z.B. dadurch kostengünstig erreicht werden, dass das Einlassrohr ein Druckgussteil ist.

Das Einlassrohr kann auch so gefertigt sein, dass die arithmetische Mittenrauheit der äußeren Oberfläche besser als 50 µm, insbesondere besser als 3,2 µm, ist.

In einer weiteren vorteilhaften Ausgestaltung der erfindungsgemäßen elektrischen Maschine ist eine innere Oberfläche des Einlassrohrs eine glatte Oberfläche. So wird eine geringere Reibung zwischen der durch das Einlassrohr gepumpten Kühlflüssigkeit und der inneren Oberfläche erreicht. Somit wird eine Kühlmöglichkeit mit verbesserter Effizienz zur Verfügung gestellt.

Eine entsprechende innere Oberfläche des Einlassrohrs wird durch eine Fertigung des Einlassrohrs möglich, die eine arithmetische Mittenrauheit der inneren Oberfläche von besser als 50 µm, insbesondere besser als 3,2 µm, sicherstellt.

In einer weiteren vorteilhaften Ausgestaltung der erfindungsgemäßen elektrischen Maschine weist das Einlassrohr eine hohe Wärmeleitfähigkeit auf. Die in dem Kanal zurückströmende Kühlflüssigkeit nimmt durch ihren direkten Kontakt mit der Berandung der axialen Bohrung die Abwärme des Rotors auf. Je näher das Kühlmittel in dem Kanal dem offenen Ende der axialen Bohrung kommt, desto höher ist seine Temperatur und umso weniger Abwärme kann es vom Rotor über die Welle aufnehmen. Dies führt dazu, dass die elektrische Maschine zumindest im Betrieb entlang ihrer axialen Erstreckung unterschiedliche Temperaturen aufweist. Indem das Einlassrohr eine hohe Wärmeleitfähigkeit aufweist, kann das Kühlmittel im Kanal die Abwärme auch auf direktem Wege durch das Einlassrohr auf das Kühlmittel, das sich im Einlassrohr befindet, übertragen. Somit wird eine gleichmäßigere Temperaturverteilung der elektrischen Maschine entlang ihrer axialen Erstreckung erreicht und somit eine effizientere Kühlung ermöglicht. Hierzu sollte das Einlassrohr eine Wärmeleitfähigkeit aufweisen, die mindestens der der Welle entspricht oder besser ist. Insbesondere sollte das Einlassrohr aus einem Material bestehen, das eine spezifische Wärmeleitfähigkeit aufweist, welche einer spezifischen Wärmeleitfähigkeit eines Materials der Welle entspricht, oder besser ist. So kann z.B. für die Welle ein Stahl verwendet werden und für das Einlassrohr Aluminium.

In einer weiteren erfindungsgemäßen Ausgestaltung der erfindungsgemäßen elektrischen Maschine weist das verschlossene Ende der axialen Bohrung ein Übertragungselement auf, das auf einer dem Zuflusselement zugewandten Seite eine Ausnehmung zum Umlenken der Kühlflüssigkeit aufweist. Durch das Übertragungselement wird der Druckabfall in einem Kühlmittelkreislauf, der das Zuflusselement und die axiale Bohrung umfasst, reduziert, da Turbulenzen im Kühlmittel gering gehalten werden. Bei einem geringeren Druckabfall wird im Kühlmittelkreislauf eine geringere Leistung der Kühlmittelpumpe benötigt und so Energie eingespart. Wenn das Zuflusselement ein Einlassrohr aufweist, kann die Ausnehmung ringförmig sein.

Für die Ausgestaltung, in der das Zuflusselement ein Einlassrohr aufweist, ist eine Ausnehmung vorteilhaft, die rotationssymmetrisch zu der Drehachse ist.

Insbesondere ist es vorteilhaft, die Ausnehmung so zu gestalten, dass die Fliehkraft das Umlenken des Kühlmittels unterstützt. Dies kann dadurch ermöglicht werden, dass eine Berandung der Ausnehmung so orientiert ist, dass durch die Fliehkraft nach außen gedrückte Kühlmittel-Teilchen eine axiale Bewegungskomponente erfahren.

In einer weiteren vorteilhaften Ausgestaltung der erfindungsgemäßen elektrischen Maschine weist das Übertragungselement eine hohe Wärmeleitfähigkeit auf. Da das Übertragungselement sich in der Welle an einer Position befindet, die geringere Erfordernisse hinsichtlich einer mechanischen Stabilität erfüllen muss, kann für das Übertragungselement ein Material hoher Wärmeleitfähigkeit unabhängig von einer Stabilitätsanforderung gewählt werden. Auch eine Dicke des Übertragungselements, d.h. seine Erstreckung in Richtung der Drehachse, kann sehr groß gewählt werden, so dass auch über den Querschnitt des Übertragungselements eine hohe Wärmeleitfähigkeit erreicht werden kann.

So kann als Material für das Übertragungselement Kupfer verwendet werden.

Unter einer hohen Wärmeleitfähigkeit wird auch hier verstanden, dass das Übertragungselement die Wärme genauso gut oder besser leitet als die Welle. Bei gleichem Querschnitt des Übertragungselements und der Welle, der durch die Abwärme durchflossen wird, würde dies bedeuten, dass die spezifische Wärmeleitfähigkeit eines Materials des Übertragungselements gleich oder besser einer spezifischen Wärmeleitfähigkeit eines Materials der Welle ist.

Vorteilhaft kann das Übertragungselement ein Material aufweisen, das nicht nur eine höhere spezifische Wärmeleitfähigkeit aufweist, als ein Material der Welle, sondern auch einen höheren Wärmeausdehnungskoeffizienten. Dadurch wird erreicht, dass bei höheren Temperaturen das Übertragungselement sich stärker ausdehnt als die Welle und somit ein besserer Kontakt zwischen dem Übertragungselement und der Welle bei höheren Temperaturen vorliegt. Somit wird eine bessere Wärmeübertragung erreicht.

In einer weiteren vorteilhaften Ausgestaltung einer erfindungsgemäßen elektrischen Maschine umfasst der Rotor ein Blechpaket aus einem ersten Material und einen angegossenen Kurzschlussring aus einem zweiten Material, das eine spezifische Wärmeleitfähigkeit aufweist, die größer ist als eine spezifische Wärmeleitfähigkeit des ersten Materials, wobei der angegossene Kurzschlussring einen Befestigungsbereich aufweist, der direkt an der Welle angebunden ist. Das erste Material für das Blechpaket des Rotors ist durch die elektromagnetischen Eigenschaften der elektrischen Maschine festgelegt. Es werden für das Blechpaket in der Regel Elektrobleche verwendet. Als erstes Material werden so in der Regel Eisen-Silizium-Legierungen eingesetzt. Es wurde nun erkannt, dass der Kurzschlussring ein zweites Material umfassen kann, dessen spezifische Wärmeleitfähigkeit kleiner ist als die des ersten Materials, ohne dass die elektromagnetischen Eigenschaften der elektrischen Maschine verschlechtert werden. Insbesondere wurde erkannt, dass es vorteilhaft ist, den Kurzschlussring zur Übertragung von Abwärme des Rotors auf die Welle zu verwenden.

Vorteilhaft ist das zweite Material Aluminium.

Vorteilhaft ist es auch, wenn der Kurzschlussring in axialer Richtung in unmittelbarer Nähe zum Übertragungselement liegt. So kann auf einem kurzen Weg mit Materialien hoher Wärmeleitfähigkeit die Abwärme auf das Kühlmittel in der axialen Bohrung übertragen werden.

In einer weiteren vorteilhaften Ausgestaltung der erfindungsgemäßen elektrischen Maschine ist der Befestigungsbereich zwischen einem Schrumpfring und der Welle angeordnet. Da sich der Schrumpfring mit zunehmender Erwärmung in geringerem Maße ausdehnt als der Befestigungsbereich des angegossenen Kurzschlussrings, presst der Schrumpfring den Befestigungsbereich gegen die Welle. So wird insbesondere bei hohen Temperaturen eine Berührungsfläche zwischen dem angegossenen Kurzschlussring und der Welle aufrechterhalten. Somit kann die Abwärme des Rotors vorteilhaft auf die Welle übertragen werden. Dies ermöglicht eine effiziente Kühlung.

Vorteilhaft ist der Schrumpfring aus einem Material, das einen mindestens um das zweifache kleineren linearen Ausdehnungskoeffizienten aufweist, als das zweite Material. Als Beispiel sei hier ein Schrumpfring aus Stahl angeführt.

Weiterhin vorteilhaft weist der Schrumpfring eine Wuchtbohrung auf. Bei dem Rotor der elektrischen Maschine muss in vielen Fällen eine Unwucht, die durch unsymmetrische Masseverteilung hervorgerufen wird, kompensiert werden. Der Schrumpfring bietet vorteilhaft eine definierte Masse entlang eines Umfangs des Rotors an, so dass entlang dem Umfang des Schrumpfrings eine Stelle ermittelt werden kann, bei der durch Entfernen einer Masse die Unwucht beseitigt werden kann. Das Entfernen der Masse kann vorteilhaft durch Bohren eines Loches geeigneter Tiefe erfolgen.

Vorteilhaft kann die effiziente Kühlmöglichkeit durch das Abführen von Abwärme aus dem Rotor über den Befestigungsbereich des angegossenen Kurzschlussrings bei einem Rotor eingesetzt werden, bei dem Kupferstäbe in Nuten des Blechpakets eingelegt sind. Die Kupferstäbe weisen eine hohe Wärmeleitfähigkeit auf, so dass die Abwärme vorteilhaft von den Kupferstäben in den Kurzschlussring transportiert wird und von dort auf dem erfindungsgemäßen Weg über den Befestigungsbereich in das Kühlmittel transportiert werden kann.

In einer weiteren erfindungsgemäßen Ausgestaltung der erfindungsgemäßen elektrischen Maschine sind an der Welle eine Dichtung und eine Leckagekammer so angeordnet, dass die Dichtung ein Einfließen der Kühlflüssigkeit in die Leckagekammer bis auf einen Leckagerest verhindern kann. Die Dichtung und die Leckagekammer ermöglichen eine Kühlung der elektrischen Maschine mit einer Kühlflüssigkeit als Kühlmittel und damit eine effiziente Kühlung. Eine Dichtung an der Welle kann nie alle Anforderungen erfüllen. Die Dichtung soll zum einen das Eindringen von Kühlflüssigkeit vermeiden und zum anderen die Drehbewegung der Welle nicht behindern. Dies sind Anforderungen, die sich gegenseitig ausschließen. Insbesondere wenn der Rotor und damit die Welle sich mit hoher Drehzahl, d.h. zwischen 4000 und 20.000 U/min, dreht, unterliegt die Dichtung einem hohen Verschleiß oder behindert die Drehbewegung des Rotors, wenn diese aus einem teueren verschleißbeständigen Material besteht.

Es können alle Varianten von bekannten Dichtungen eingesetzt werden. Die Dichtung kann z.B. als radiale Dichtung um die Drehachse oder als axiale Dichtung am offenen Ende der Welle ausgeführt sein. Es kann für die Dichtung z.B. auch ein Dichtungssystem eingesetzt werden, das mehrere Teile umfasst, die zusammenwirken, um ein Einfließen der Kühlflüssigkeit in die Leckagekammer bis auf einen Leckagerest verhindern zu können.

Durch das Anordnen einer Leckagekammer hinter der Dichtung wird es bei diesen Anforderungen möglich, eine effiziente Kühlung mit einer Kühlflüssigkeit zu ermöglichen. Denn Kühlflüssigkeit, die als Leckagerest zwischen der Dichtung und der Welle eindringt, gelangt in die Leckagekammer. Die Wahrscheinlichkeit, dass die Kühlflüssigkeit eine mechanische Fehlfunktion bei den Lagern hervorruft oder elektrische Fehlfunktionen bei der Wicklung des Rotors und des Stators hervorruft wird verringert. Somit kann man bei der elektrischen Maschine trotz Verwendung einer Kühlflüssigkeit, die in der Welle fließt, eine ausreichende Lebensdauer für die Funktion der elektrischen Maschine garantieren.

Die Leckagekammer kann eine Größe aufweisen, die abhängig von der Dichtung so ausgelegt ist, dass sie über eine vorgeschriebene Lebensdauer die zwischen Dichtung und Welle hindurchtretende Kühlflüssigkeit aufnehmen kann. So kann die Leckagekammer vorteilhaft ein Eindringen von Kühlflüssigkeit in das Gehäuse, insbesondere die Lager, die Rotorwicklung oder in die Statorwicklung, verhindern, ohne dass die Leckagekammer eine Öffnung zum Abfließen der Kühlflüssigkeit aufweisen muss.

Die Leckagekammer kann auch eine Öffnung zum Abfließen der Kühlflüssigkeit aufweisen. So kann die Leckagekammer kleiner ausgeführt werden und es müssen keine Annahmen über die Lebensdauer der elektrischen Maschine gemacht werden, um die Leckagekammer entsprechend zu dimensionieren.

Die Leckagekammer kann auch einen entfernbaren Verschluss aufweisen. So kann vorteilhaft vor dem Überlaufen der Leckagekammer die dort angesammelte Kühlflüssigkeit durch Entfernen des Verschlusses ablaufen. Der Verschluss kann vor einem drohenden Überlaufen der Leckagekammer oder im Rahmen einer Wartung entfernt werden, um Kühlflüssigkeit, die sich möglicherweise angesammelt hat, aus der elektrischen Maschine ablaufen zu lassen. Anschließend kann die Leckagekammer mit dem Verschluss wieder verschlossen werden.

Die Leckagekammer kann durch Bestandteile der elektrischen Maschine teilweise berandet sein. Beispiele für diese Bestandteile sind ein Lagerschild oder ein Dichtungshalter. Auch eine Blende als Trennung zu einem Raum, in dem das Lager angeordnet ist, kann die Leckagekammer beranden. Die Blende bildet dann vorteilhaft ein weiteres Hindernis, das die Kühlflüssigkeit überwinden muss, um in das Lager, zum Rotor oder zum Stator zu gelangen. Die Blende kann im Gehäuse der elektrischen Maschine, einem Träger des Zuflusselements oder dem Lagerschild formschlüssig oder kraftschlüssig befestigt sein. Die Blende kann auch einstückig mit dem Gehäuse, dem Träger des Zuflusselements oder dem Lagerschild verbunden sein. Die Blende kann als eine Abdeckscheibe ausgeführt sein.

In einer weiteren vorteilhaften Ausgestaltung der erfindungsgemäßen elektrischen Maschine ist die Dichtung an der Welle so angeordnet, dass ein Fluid zu einer Verringerung des Einfließens des Leckagerestes auf eine dem Fluid zugewandten Oberfläche der Dichtung wirken kann. So gelangt weniger Kühlmittel in die Leckagekammer.

Das Fluid kann so auf die dem Fluid zugewandte Oberfläche wirken, dass die Dichtung gegen die Welle gepresst wird. Wenn die Dichtung ein Dichtungssystem ist, das mehrere Teile umfasst, die zusammenwirken, um ein Einfließen der Kühlflüssigkeit in die Leckagekammer bis auf einen Leckagerest verhindern zu können, kann das Fluid so auf die dem Fluid zugewandte Oberfläche wirken, dass die verschiedene Teile gegeneinander gepresst werden.

Wenn die Kühlflüssigkeit aufgrund eines Rückhalteelements nicht auf die dem Fluid zugewandte Oberfläche der Dichtung wirken kann, ist das Fluid ein Gas, insbesondere Luft, die sich in einem Hohlraum zwischen dem Rückhalteelement und der Dichtung befindet. In diesem Fall befindet sich das Rückhalteelement zwischen dem offenen Ende der axialen Bohrung und dem Hohlraum. Das Rückhalteelement verhindert bzw. vermindert das Eindringen der Kühlflüssigkeit in den Hohlraum. Das Rückhalteelement kann eine Dichtung sein, insbesondere eine Spaltdichtung.

Wenn kein Rückhalteelement vorhanden ist, wird die Kühlflüssigkeit an der Dichtung vorbeigeführt und presst diese gegen die Welle. In diesem Fall ist das Fluid die Kühlflüssigkeit.

In beiden Fällen wird mit zunehmender Drehzahl des Rotors, insbesondere bei hohen Drehzahlen des Motors, ein verstärkter Druck des Fluids auf die Dichtung bewirkt.

In einer weiteren vorteilhaften Ausgestaltung der erfindungsgemäßen elektrischen Maschine ist die Leckagekammer zumindest teilweise durch eine radiale Oberfläche der Welle berandet und an der radialen Oberfläche der Welle eine Schleuderscheibe vorhanden. Die Schleuderscheibe ist so mit der Welle verbunden, dass sich diese durch ein Drehen der Welle in Bewegung setzt. Durch ein Bewegen der Schleuderscheibe wird die Kühlflüssigkeit, die zwischen der Dichtung und der Welle hindurch dringt, gegen die Berandung der Leckagekammer geschleudert, so dass die Kühlflüssigkeit nicht in die elektrische Maschine eindringen kann, insbesondere nicht in das Lager, den Rotor oder den Stator. An der Berandung der Leckagekammer sammelt sich so die eingedrungene Kühlflüssigkeit, die dort aufbewahrt werden kann oder über eine Öffnung der Leckagekammer abfließen kann.

Die Schleuderscheibe ist insbesondere so ausgebildet, dass Kühlflüssigkeit, insbesondere Kühlflüssigkeitstropfen, durch eine beim Drehen der Schleuderscheibe auftretende Fliehkraft radial zu einem äußeren Rand der Schleuderscheibe befördert werden und dort von der Schleuderscheibe geschleudert werden.

Die Kühlflüssigkeit oder Kühlflüssigkeitstropfen können insbesondere dadurch auf die Schleuderscheibe gelangen, indem sie an der radialen Oberfläche der Welle bis zur Schleuderscheibe entlang fließen.

Die Schleuderscheibe kann durch einen Durchmesserunterschied in der Welle ausgebildet sein. Dieser Durchmesserunterschied kann durch Nuten oder Absätze in der Welle ausgebildet sein.

Diese können sehr einfach auf einer Drehmaschine an der Welle erzeugt werden.

Die Schleuderscheibe kann auch einen großen Durchmesser aufweisen und so zusätzlich das Lager oder Öffnungen in einen Innenraum der elektrischen Maschine wie ein Schirm abdecken.

In einer weiteren vorteilhaften Ausgestaltung der erfindungsgemäßen elektrischen Maschine ist vom offenen Ende der Welle entlang der Drehachse gesehen vor dem Rotor eine Dichtung und hinter der Dichtung eine Leckagekammer angeordnet, wobei die Leckagekammer zumindest teilweise durch eine radiale Oberfläche der Welle und der Dichtung berandet ist. Dadurch dass hinter der Dichtung die Leckagekammer angeordnet ist, die zumindest teilweise durch eine radiale Oberfläche der Welle und der Dichtung berandet ist, wird eine platzsparende Kühlung der elektrischen Maschine mit einer Kühlflüssigkeit als Kühlmittel ermöglicht. So wird eine effizientere Kühlung der elektrischen Maschine erreicht.

In einer weiteren vorteilhaften Ausgestaltung der erfindungsgemäßen elektrischen Maschine ist die Dichtung so an der Welle angeordnet, dass ein Fluid auf eine dem Fluid zugewandten Oberfläche der Dichtung wirken kann, die dem offenen Ende der axialen Bohrung näher liegt als eine der Leckagekammer zugewandten Oberfläche der Dichtung, so dass das Fluid die Dichtung gegen die Welle pressen kann. Dadurch, dass das Fluid die Dichtung gegen die Welle presst, kann weniger Kühlflüssigkeit zwischen Dichtung und Welle hindurch gelangen und so in die Leckagekammer eintreten.

Wenn die Kühlflüssigkeit aufgrund eines Rückhalteelements nicht auf die dem Fluid zugewandte Oberfläche der Dichtung wirken kann, ist das Fluid ein Gas, insbesondere Luft, die sich in einem Hohlraum zwischen dem Rückhalteelement und der Dichtung befindet. In diesem Fall befindet sich das Rückhalteelement zwischen dem offenen Ende der axialen Bohrung und dem Hohlraum. Das Rückhalteelement verhindert bzw. vermindert das Eindringen der Kühlflüssigkeit in den Hohlraum. Das Rückhalteelement kann eine Dichtung sein, insbesondere eine Spaltdichtung.

Wenn kein Rückhalteelement vorhanden ist, wird die Kühlflüssigkeit an der Dichtung vorbeigeführt und presst diese gegen die Welle. In diesem Fall ist das Fluid die Kühlflüssigkeit.

In beiden Fällen wird mit zunehmender Drehzahl des Rotors, insbesondere bei hohen Drehzahlen des Motors, ein verstärkter Druck des Fluids auf die Dichtung bewirkt.

In beiden Fällen wird auch die Dichtung um so stärker gegen die Welle gepresst, je höher der Druck in der Kühlflüssigkeit ist.

Die Dichtung kann auf der dem Fluid zugewandten Oberfläche Ausnehmungen aufweisen, die das Pressen der Dichtung gegen die Welle durch das Fluid verbessern.

Die Dichtung kann auch gebogene Bereiche aufweisen, die ein verbessertes Pressen der Dichtung gegen die Welle durch das Fluid ermöglichen. Die gebogenen Bereiche können auch eine Reserve darstellen, die sich bei einem Verschleiß der Dichtung nachstellen, so dass die Dichtung trotz Verschleiß immer noch gut an der Welle anliegt.

Bei einer weiteren vorteilhaften Ausgestaltung eines erfindungsgemäßen Kühlsystems umfasst der Kühlmittelkreislauf eine Kühlmittelpumpe zum Transportieren des Kühlmittels von der Kühlmittelpumpe zu einem Kühlmitteleintritt der elektrischen Maschine und von einem Kühlmittelaustritt der elektrischen Maschine zu der Kühlmittelpumpe. Das Kühlmittel kann so unabhängig von einem Betrieb der elektrischen Maschine mit der Kühlmittelpumpe durch den Kühlmittelkreislauf transportiert werden. So kann mithilfe der Kühlmittelpumpe die für eine effiziente Kühlung notwendige Fließgeschwindigkeit des Kühlmittels, d.h. der Volumenstrom des Kühlmittels, zum Abführen der Abwärme eingestellt werden.

Bei einer weiteren vorteilhaften Ausgestaltung eines erfindungsgemäßen Kühlsystems umfasst das Kühlmittel Wasser und ein Frostschutzmittel. Hierdurch wird aufgrund der hohen Wärmekapazität des Kühlmittels eine effiziente Kühlung erreicht. Auch bei niedrigen Temperaturen reicht so eine geringe Energie zum Transportieren des Kühlmittels aus. Dies ermöglicht eine effiziente Kühlung der elektrischen Maschine.

Vorteilhaft ist ein Frostschutzmittel, das eine Korrosion des Kühlsystems, insbesondere in der elektrischen Maschine, vermeidet oder nur in geringem Maße zulässt. So kann insbesondere das Frostschutzmittel eine Korrosion von Bestandteilen der elektrischen Maschine, die als Material einen Stahl aufweisen, gering halten oder vermeiden.

Eine vorteilhafte Ausgestaltung eines erfindungsgemäßen Fahrzeugs umfasst ein erfindungsgemäßes Kühlsystem.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren dargestellt und näher erläutert werden. Es zeigen:
- FIG 1: ein erstes Ausführungsbeispiel einer elektrischen Maschine,
- FIG 2: den gemessenen Druckabfall in Abhängigkeit von der Drehzahl bei einem Kühlsystem mit einer erfindungsgemäßen elektrischen Maschine,
- FIG 3: einen vergrößerten Teilbereich der FIG 1 in einer Umgebung eines offenen Endes einer Welle,
- FIG 4: ein weiteres Ausführungsbeispiel einer elektrischen Maschine, wobei ein Bereich um ein offenes Ende einer Welle gezeigt ist,
- FIG 5: ein Ausführungsbeispiel eines Kühlsystems,
- FIG 6: ein Ausführungsbeispiel eines Fahrzeugs.

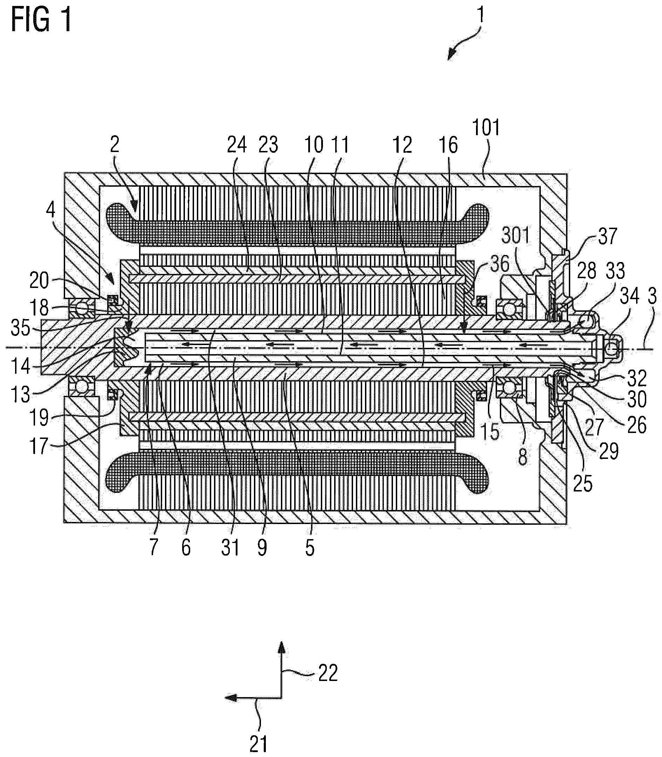

FIG 1 zeigt ein Ausführungsbeispiel einer elektrischen Maschine 1, die einen Stator 2 und einen Rotor 4 umfasst. Der Stator 2 ist im Gehäuse 101 befestigt. Der Rotor 4 ist um die Drehachse 3 drehbar gelagert, indem die Welle 5 über ein Lager 8 im Gehäuse 101 gelagert ist. Das Lager 8 ist in diesem Ausführungsbeispiel ein Kugellager.

Zur Kühlung wird eine Kühlflüssigkeit 15 als Kühlmittel 15 verwendet, die aus Wasser und Glysantin G30® im Verhältnis 50:50 besteht.

Die Welle 5, auf der der Rotor 4 befestigt ist, weist eine axiale Bohrung 6 auf. Ein Zuflusselement 7 erstreckt sich von einem offenen Ende der Welle 5 so in die axiale Bohrung 6, dass eine Kühlflüssigkeit 15 aus dem Zuflusselement 7 in die axiale Bohrung 6 fließen kann. Das Zuflusselement 7 weist ein Einlassrohr 9 auf, das in einem Träger 37 des Zuflusselementes 7 befestigt ist. Der Träger 37 ist am Gehäuse 101 der elektrischen Maschine 1 befestigt.

Der Pfeil 21 legte eine axiale Richtung der elektrischen Maschine 1 fest. Der Pfeil 22 legt eine radiale Richtung der elektrischen Maschine 1 fest.

Zu einer Kühlung der elektrischen Maschine 1 fließt erfindungsgemäß die Kühlflüssigkeit 15 durch den Kühlmitteleintritt 34 in das Einlassrohr 9. Im Einlassrohr 9 fließt das Kühlmittel 15 in Richtung eines verschlossenen Endes der axialen Bohrung 6, wo sie aus dem Einlassrohr 9 austritt und durch ein Übertragungselement 13 umgelenkt wird. Das Übertragungselement 13 weist hierzu eine Ausnehmung 14 auf, die rotationssymmetrisch zur Drehachse 3 ausgebildet ist, so dass die Kühlflüssigkeit nur geringe durch das Umlenken der Kühlflüssigkeit verursachte Turbulenzen aufweist. Das Übertragungselement 13 ist aus Aluminium, so dass es eine Abwärme, die es an der Berandung 12 der axialen Bohrung 6 oder an dem verschlossenen Ende der axialen Bohrung 6 aufgenommen hat, im guten Maße auf die Kühlflüssigkeit 15 übertragen kann. Die Welle 5 wurde in herkömmlicher Weise aus einem Stahl gefertigt. Aufgrund des größeren Wärmeausdehnungskoeffizienten des Übertragungselements 13 gegenüber dem herkömmlichen Stahl der Welle 5 wird das Übertragungselement gegen die Berandung 12 der axialen Bohrung 6 gepresst, so dass mit zunehmender Temperatur ein besserer Wärmeübergang zwischen der Berandung 12 der axialen Bohrung 6 und dem Übertragungselement 13 vorhanden ist. Nachdem die Kühlmittelflüssigkeit 15 erfindungsgemäß durch das Übertragungselement 13 umgelenkt wurde, fließt die Kühlflüssigkeit 15 erfindungsgemäß in den hohlzylinderförmigen Kanal 31, der durch die Berandung 12 der axialen Bohrung 6 und die äußere Oberfläche 10 des Einlassrohrs 9 gebildet wird. An einem offenen Ende der Welle 5 fließt dann die Kühlflüssigkeit 15 aus dem hohlzylinderförmigen Kanal 31 in den hohlzylinderförmigen Raum 32. Von dort verlässt die Kühlflüssigkeit 15 den hohlzylinderförmigen Raum 32 durch einen Kühlmittelaustritt 33, der sich mit einem Teil seines Querschnitts durch einen Ausschnitt einer radialen Berandung des hohlzylinderförmigen Raums 32 in den hohlzylinderförmigen Raum 32 erstreckt.

Der Rotor 4 weist ein Blechpaket 16 auf sowie Kupferstäbe 23, die in den Nuten 24 des Blechpakets 16 angeordnet sind. Die Kupferstäbe 23 sind durch aus Aluminium angegossene Kurzschlussringe 17 kurzgeschlossen. In der FIG 1 ist ein Restquerschnitt in radialer Richtung neben den Kupferstäben 23 in einer anderen Schraffur gezeichnet als die Kurzschlussringe 17. Die Restquerschnitte der Nuten 24 können unabhängig von einem Angießen der Kurzschlussringe 17 ausgegossen werden oder beim Angießen der Kurzschlussringe 17 mit Aluminium ausgegossen werden.

Die angegossenen Kurzschlussringe 17 weisen einen Befestigungsbereich 18 auf. Dieser ist direkt an der Welle 5 angebunden. Das heißt, dass eine Oberfläche des Kurzschlussrings 17 in der Nähe des Befestigungsbereichs 18 die Oberfläche der Welle 5 berührt. Um diesen Kontakt zwischen dem Kurzschlussring 17 und der Welle 5 über einen großen Temperaturbereich sicherzustellen, ist ein Schrumpfring 19 so am Kurzschlussring 17 angeordnet, dass der Befestigungsbereich 18 sich zwischen dem Schrumpfring 19 und der Welle 5 befindet. Der Schrumpfring 19 ist aus einem Stahl, der sich mit zunehmender Temperatur weniger stark ausdehnt als das Aluminium des Kurzschlussrings 17. Der Schrumpfring 19 wird beim Auswuchten des Rotors für das Anbringen von Wuchtbohrungen 20 genutzt. Die Anzahl und die Tiefe der Wuchtbohrungen 20 sowie deren Anordnung am Schrumpfring ist abhängig von der individuellen Unwucht eines Rotors 4.

Wenn sich nun die Bestandteile des Rotors 4, insbesondere die Kurzschlussstäbe 23, im Betrieb der elektrischen Maschine 1 erwärmen, wird die Abwärme über die gute Wärmeleitfähigkeit der Kupferstäbe 23 in die Kurzschlussringe 17 transportiert und von den Kurzschlussringen 17 über deren Befestigungsbereich 18 in die Welle 5.

Dies ist für einen der Kurzschlussringe 17 in FIG 1 durch Pfeil 35 wiedergegeben, der eine Richtung der Wärmeübertragung in das Übertragungselement 13 andeutet. Von dem Übertragungselement 13 nimmt die Kühlflüssigkeit 15 die Abwärme auf und kann sie zu einem Kühlmittelaustritt 33 transportieren.

Bei dem anderen der Kurzschlussringe 17 wird die Wärme von der Welle 5 direkt auf die Kühlflüssigkeit 15 übertragen, wie dies der Pfeil 36 andeutet.

Das Einlassrohr 9 ist ein Druckgussteil aus Aluminium. Durch die gute Wärmeleitfähigkeit des Aluminiums wird eine gleichmäßigere Kühlung der Welle 5 entlang der Drehachse 3 erreicht. Die Abwärme, die die Kühlflüssigkeit 15 im hohlzylinderförmigen Kanal 31 aufnimmt, kann nämlich durch die gute Wärmeleitfähigkeit des Einlassrohrs 9 in höherem Maße auf die Kühlflüssigkeit 15 innerhalb des Einlassrohrs 9 übertragen werden. So unterstützt die relativ kalte Kühlflüssigkeit 15 innerhalb des Einlassrohrs 9 in der Nähe des geschlossenen Endes der axialen Bohrung 6 die Kühlflüssigkeit 15 im hohlzylinderförmigen Kanal 31, indem sie von dieser durch das Aluminium des Einlassrohrs 9 schon eine gewisse Menge der Abwärme aufnimmt.

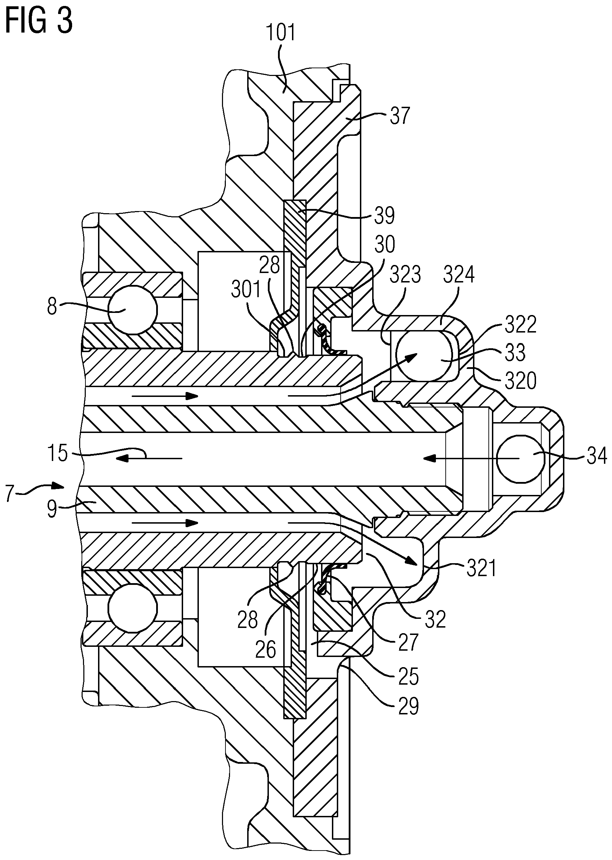

Die FIG 3 zeigt einen vergrößerten Teilbereich der FIG 1 in einer Umgebung des offenen Endes der Welle 5.

Erfindungsgemäß ist auf der der axialen Bohrung 6 gegenüberliegende Seite die axiale Berandung 320 vorgesehen, die den hohlzylinderförmigen Raum 32 begrenzt und die eine spiralförmige Führung der Kühlflüssigkeit 15 um die Drehachse 3 von dem axial der Welle 5 nahe angeordneten Teil 321 der axialen Berandung 320 zu dem axial von der Welle 5 entfernt angeordneten Teil 322 der axialen Berandung 320 ermöglicht. So wird das Kühlmittel 15 entlang der axialen Berandung 320 in den Kühlmittelaustritt 33 geführt.

Der Kühlmittelaustritt 33 erstreckt sich durch einen Ausschnitt in der radialen Berandung 324 des hohlzylinderförmigen Raumes 32 in den hohlzylinderförmigen Raum 32. In der FIG 3 ist dies daran zu erkennen, dass die Berandung 323 des Kühlmittelaustritts 33 sich innerhalb des hohlzylinderförmigen Raumes 32 befindet.

Es ist in FIG 1 und in FIG 3 die Leckagekammer 25 zu sehen, die durch eine radiale Oberfläche 26 der Welle 5 und eine Dichtung 27 zumindest teilweise berandet ist. In FIG 1 und 3 ist auch eine Schleuderscheibe 28 zu sehen, sowie eine Ablauföffnung 29, durch die die Kühlflüssigkeit 15, die sich in der Leckagekammer 25 ansammelt, ablaufen kann.

Die Schleuderscheibe 28 bewirkt das Abschleudern der Kühlflüssigkeit 15 von der Welle 5. Die Schleuderscheibe 28 wird durch eine Nut 301 und einen Absatz 30 in der Welle 5 gebildet. Der Absatz 30 weist eine zusätzlich ausgebildete Nut auf. Die Dichtung 27 ist so an der Welle 5 angeordnet, dass die Kühlflüssigkeit 15 die Dichtung 27 gegen die Welle 5 pressen kann.

Die FIG 3 zeigt weiterhin, dass die Leckagekammer durch eine Blende 39 teilweise berandet ist. Die Blende 39 trennt den Leckageraum von einem Raum, in dem das Lager 8 angeordnet ist. Die Blende 39 bildet somit vorteilhaft ein weiteres Hindernis, das die Kühlflüssigkeit 15 überwinden muss, um in das Lager 8 zum Rotor 4 oder zum Stator 2 zu gelangen.

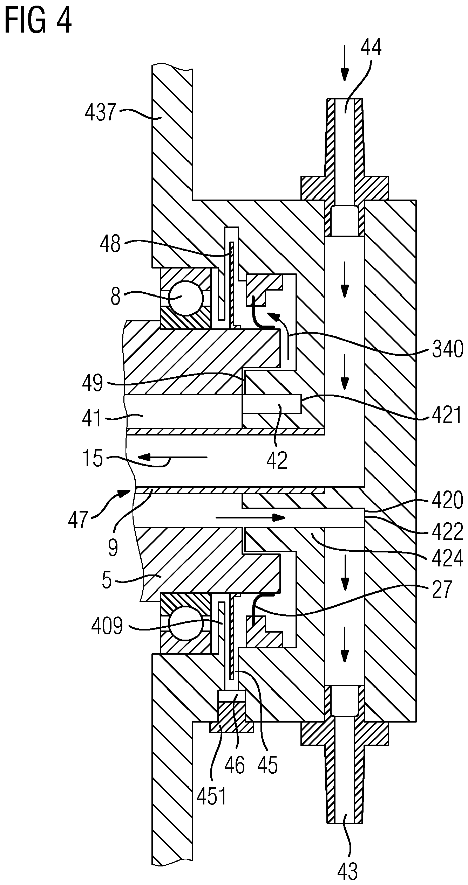

Die FIG 4 zeigt ein weiteres Ausführungsbeispiel einer elektrischen Maschine 1, wobei ein Bereich um ein offenes Ende einer Welle 5 gezeigt ist. Die FIG 4 zeigt dabei nur den Ausschnitt der elektrischen Maschine 1, der sich gegenüber dem Ausführungsbeispiel einer elektrischen Maschine 1 der FIG 1 geändert hat. Alle übrigen Bestandteile der elektrischen Maschine sind wie in FIG 1 ausgeführt.

Die Kühlflüssigkeit 15 tritt über den Kühlmitteleintritt 44 in den Träger 437 des Zuflusselements 47 ein und gelangt von dort in das Einlassrohr 9. Nachdem die Kühlflüssigkeit durch das Einlassrohr 9 geflossen ist, fließt sie durch das Übertragungselement 13 umgelenkt in den hohlzylinderförmigen Kanal 41. Von diesem fließt die Kühlflüssigkeit 15 über den hohlzylinderförmigen Raum 42 in den Kühlmittelaustritt 43.

Es ist auf der der axialen Bohrung 6 gegenüberliegende Seite die axiale Berandung 420 zu sehen, die den hohlzylinderförmigen Raum 42 begrenzt und die eine spiralförmige Führung der Kühlflüssigkeit 15 um die Drehachse 3 von dem axial der Welle 5 nahe angeordneten Teil 421 der axialen Berandung 420 zu dem axial von der Welle 5 entfernt angeordneten Teil 422 der axialen Berandung 420 ermöglicht. So wird das Kühlmittel 15 entlang der axialen Berandung 420 in den Kühlmittelaustritt 43 geführt.

Der Kühlmittelaustritt 43 ist in einer radialen Berandung 424 des hohlzylinderförmigen Raumes 42 angebracht, damit die axiale Berandung 420 die Kühlflüssigkeit 15, mit Unterstützung der Fliehkraft in den Kühlmittelaustritt 43 führt.

In dem Ausführungsbeispiel der FIG 4 ist am Übergang der Welle 5 zum Träger 437 ein Rückhalteelement in Form einer Spaltdichtung 49 vorgesehen. Die Dichtung 27 wird durch Luft 340, die sich in dem Hohlraum zwischen dem Rückhalteelement, d.h. der Spaltdichtung 49 und der Dichtung 27 befindet, gegen die Welle 15 gepresst.

Die Schleuderscheibe 48 ist in diesem Ausführungsbeispiel mit einem großen Durchmesser ausgeführt, der tief in die Leckagekammer 45 reicht. So hat die Schleuderscheibe 48 nicht nur die Aufgabe, eindringende Kühlflüssigkeit tief in die Leckagekammer 45 zu schleudern, sondern deckt auch eine verbleibende Öffnung der Blende 409 zum Lager 8 ab.

Die Leckagekammer ist in diesem Ausführungsbeispiel durch einen Verschluss 451 verschlossen, so dass sich die Kühlflüssigkeit 15 an einer Sammelstelle 46 in der Leckagekammer sammelt und im Rahmen notwendiger Wartungsmaßnahmen durch Entfernen des Verschlusses 451 abfließen kann.

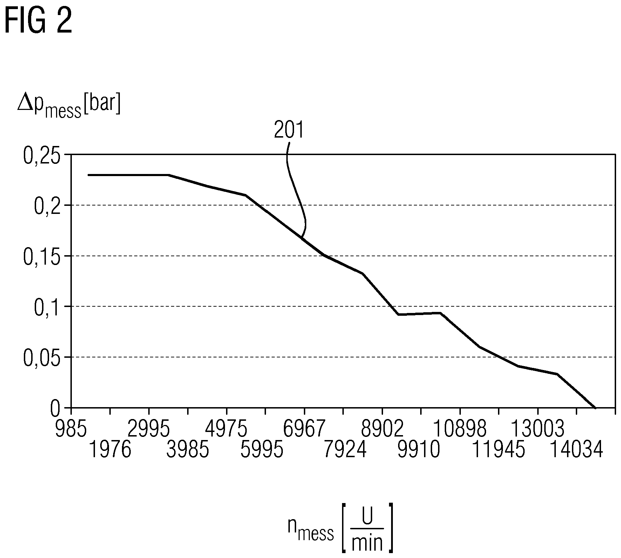

FIG 2 zeigt den gemessenen Druckabfall Δpₘₑₛₛ in Abhängigkeit von der Drehzahl nₘₑₛₛ des Rotors der elektrischen Maschine 1 bei einem Kühlsystem 50 mit einer erfindungsgemäßen elektrischen Maschine 1. Die Messpunkte wurden an einem ersten Aufbau des Ausführungsbeispiels gemäß FIG 4 ermittelt.

Die FIG 2 zeigt, dass sich mit zunehmender Drehzahl der Druckabfall nicht erhöht. Vielmehr zeigen die Messpunkte, dass sich sogar ab einer Drehzahl von ca. 4000 U/min der Druckabfall verringert.

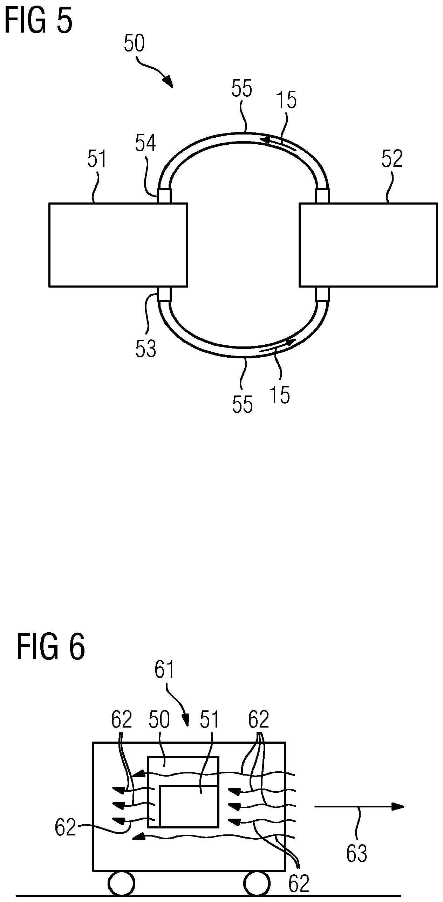

Die FIG 5 zeigt ein Ausführungsbeispiel eines Kühlsystems 50. Das Kühlsystem 50 umfasst einen Kühlmittelkreislauf 55 zum Transportieren der Kühlflüssigkeit 15 durch die axiale Bohrung 6. Der Kühlmittelkreislauf 55 umfasst eine Kühlmittelpumpe 52 zum Transportieren der Kühlflüssigkeit 15 von der Kühlmittelpumpe 52 zu einem Kühlmitteleintritt 54 der elektrischen Maschine 51 und von einem Kühlmittelaustritt 53 der elektrischen Maschine 51 zu der Kühlmittelpumpe 52.

So pumpt die Kühlmittelpumpe 52 die Kühlflüssigkeit 15 von der Kühlmittelpumpe 52 zu einem Kühlmitteleintritt 54 der elektrischen Maschine 51 und von dort über den Kühlmittelaustritt 53 wieder zurück zur Kühlmittelpumpe 52.

Der Kühlmitteleintritt 54 ist bei dem Ausführungsbeispiel der FIG 1, 3 und 4 mit dem gleich bezeichneten Kühlmitteleintritt mit den Bezugszeichen 34 und 44 verbunden, so dass die Kühlflüssigkeit in das Einlassrohr 9 fließen kann. Analog dazu ist der Kühlmittelaustritt 53 mit dem gleichnamigen Kühlmittelaustritt mit den Bezugszeichen 33 und 43 verbunden.

FIG 6 zeigt ein Ausführungsbeispiel eines Fahrzeugs 61. Das Fahrzeug 61, das ein Kraftfahrzeug ist, fährt durch die elektrische Maschine 1 angetrieben in eine Richtung 63 mit einer ersten Geschwindigkeit. Dies führt dazu, dass ein Fahrtwind 62 über die elektrische Maschine 52 streicht, die im oder am Fahrzeug 61 befestigt ist. Dies führt dazu, dass die elektrische Maschine 52 ein gewisses Maß an Kühlung erfährt. Die elektrische Maschine 52 wird außerdem durch das Kühlsystem 50 gekühlt. Das Kühlsystem 50 kann durch die erfindungsgemäße Ausführung der elektrischen Maschine 52 unabhängig von einem Betrieb oder Betriebszustand der elektrischen Maschine 52 gekühlt werden.

In dem Ausführungsbeispiel der FIG 4 kann am Übergang der Welle 5 zum Träger 437 anstatt eines Rückhalteelement in Form einer Spaltdichtung 49 auch eine axiale Dichtung vorgesehen sein, die zwei Teile umfasst, die gegeneinander gepresst werden. Dann könnte die Dichtung 27 entfallen oder als zusätzliche Dichtung beibehalten werden.

## Patentansprüche

1. Elektrische Maschine (1, 51), insbesondere Asynchronmaschine, umfassend
- einen Stator (2),
- einen um eine Drehachse (3) drehbar gelagerten Rotor (4), der im Betrieb der elektrischen Maschine (1, 51) mit dem Stator (2) magnetisch zusammenwirkt,
- eine Welle (5), auf der der Rotor (4) befestigt ist und die eine axiale Bohrung (6) aufweist,
- ein Zuflusselement (7, 47), das sich so in die axiale Bohrung (6) erstreckt, dass eine Kühlflüssigkeit (15) aus dem Zuflusselement (7, 47) in die axiale Bohrung (6) fließen kann,
- wobei das Zuflusselement (7, 47) ein Einlassrohr (9) aufweist, das sich in die axiale Bohrung (6) erstreckt,
- wobei die Kühlflüssigkeit (15) durch einen Kühlmitteleintritt (34, 44) in das Einlassrohr (9) fließen kann,
- wobei ein verschlossenes Ende der axialen Bohrung (6) ein Übertragungselement (13) aufweist, das auf einer dem Zuflusselement (7, 47) zugewandten Seite eine Ausnehmung (14) zum Umlenken der Kühlflüssigkeit (15) aufweist,
- wobei durch die Berandung (12) der axialen Bohrung (6) und die äußere Oberfläche (10) des Einlassrohrs (9) ein hohlzylinderförmiger Kanal (31) gebildet wird, durch den die Kühlflüssigkeit (15) nach dem Umlenken fließt,
- wobei die elektrische Maschine (1, 51) einen hohlzylinderförmigen Raum (32, 42) umfasst, der an einem offenen Ende der Welle (5) so angeordnet ist, dass die Kühlflüssigkeit (15) aus der axialen Bohrung (6) in den Raum (32, 42) fließen kann, und der Raum (32, 42) in axialer Richtung durch eine axiale Berandung (320, 420) auf der der axialen Bohrung (6) gegenüberliegende Seite begrenzt ist,
- wobei an der Welle (5) eine Dichtung (27) und eine Leckagekammer (25) so angeordnet sind, dass die Dichtung (27) ein Einfließen der Kühlflüssigkeit (15) in die Leckagekammer (25) bis auf einen Leckagerest verhindern kann,
**dadurch gekennzeichnet, dass** die axiale Berandung (320, 420) eine spiralförmige Führung der Kühlflüssigkeit (15) um die Drehachse (3) von dem axial der Welle (5) nahe angeordneten Teil (321, 421) der axialen Berandung (320, 420) zu dem axial von der Welle (5) entfernt angeordneten Teil (322, 422) der axialen Berandung (320, 420) ermöglicht, um die Kühlflüssigkeit (15) in einen Kühlmittelaustritt (33, 43) der elektrischen Maschine zu führen.

2. Elektrische Maschine (1, 51) nach Anspruch 1, wobei sich der Kühlmittelaustritt (33) durch einen Ausschnitt in einer radialen Berandung (324) des hohlzylinderförmigen Raumes (32) in den hohlzylinderförmigen Raum (32) erstreckt.

3. Elektrische Maschine (1, 51) nach Anspruch 1, wobei der Kühlmittelaustritt (43) in einer radialen Berandung (424) des hohlzylinderförmigen Raumes (42) angebracht ist.

4. Elektrische Maschine (1, 51) nach einem der vorhergehenden Ansprüche,
- wobei der Rotor (4) ein Blechpaket (16) aus einem ersten Material und einen angegossenen Kurzschlussring (17) aus einem zweiten Material umfasst, das eine spezifische Wärmeleitfähigkeit aufweist, die größer ist als eine spezifische Wärmeleitfähigkeit des ersten Materials,
- wobei der angegossene Kurzschlussring (17) einen Befestigungsbereich (18) aufweist, der direkt an der Welle (5) angebunden ist.

5. Elektrische Maschine (1, 51) nach einem der vorhergehenden Ansprüche,
- wobei die Leckagekammer (25) zumindest teilweise durch eine radiale Oberfläche (26) der Welle berandet ist,
- wobei an der radialen Oberfläche (26) der Welle eine Schleuderscheibe (28) vorhanden ist.

6. Elektrische Maschine (1, 51) nach einem der vorhergehenden Ansprüche, wobei die Dichtung (27) an der Welle (5) so angeordnet ist, dass die Kühlflüssigkeit (15) zu einer Verringerung des Einfließens des Leckagerestes auf eine der Kühlflüssigkeit (15) zugewandten Oberfläche der Dichtung (27) wirken kann.

7. Kühlsystem (50), umfassend eine elektrische Maschine (1, 51) nach einem der Ansprüche 1 bis 6 und einen Kühlmittelkreislauf (55) zum Transportieren der Kühlflüssigkeit (15) durch die axiale Bohrung (6).

8. Fahrzeug (61), umfassend ein Kühlsystem (50) nach Anspruch 7.

## Claims

1. Electrical machine (1, 51), in particular an asynchronous machine, comprising
- a stator (2),
- a rotor (4) which is rotatably mounted about an axis of rotation (3) and interacts magnetically with the stator (2) during operation of the electrical machine (1, 51),
- a shaft (5) on which the rotor (4) is fixed and which has an axial bore (6),
- an inflow element (7, 47) which extends into the axial bore (6) such that a cooling liquid (15) can flow out of the inflow element (7, 47) into the axial bore (6),
- wherein the inflow element (7, 47) has an inlet pipe (9) which extends into the axial bore (6),
- wherein the cooling liquid (15) can flow through a coolant inlet (34, 44) into the inlet pipe (9),
- wherein a closed end of the axial bore (6) has a transfer element (13) having, on a side facing the inflow element (7, 47), a recess (14) for deflecting the cooling liquid (15),
- wherein the boundary (12) of the axial bore (6) and the external surface (10) of the inlet pipe (9) form a hollow cylindrical duct (31), through which the cooling liquid (15) flows after the deflection,
- wherein the electrical machine (1, 51) comprises a hollow cylindrical chamber (32, 42) which is disposed at an open end of the shaft (5) such that the cooling liquid (15) can flow out of the axial bore (6) into the chamber (32, 42), and the chamber (32, 42) is delimited in the axial direction by an axial boundary (320, 420) on the side opposite the axial bore (6),
- wherein a seal (27) and a leakage chamber (25) are disposed on the shaft (5) such that the seal (27) can prevent the cooling liquid (15) from flowing into the leakage chamber (25) apart from a residual leakage,
**characterised in that** the axial boundary (320, 420) enables the cooling liquid (15) to be spirally guided around the axis of rotation (3) from the part (321, 421) of the axial boundary (320, 420) disposed axially close to the shaft (5) to the part (322, 422) of the axial boundary (320, 420) disposed axially distant from the shaft (5), in order to guide the cooling liquid (15) in a coolant outlet (33, 43) of the electrical machine.

2. Electrical machine (1, 51) according to claim 1, wherein the coolant outlet (33) extends into the hollow cylindrical chamber (32) through a cutout in a radial boundary (324) of the hollow cylindrical chamber (32).

3. Electrical machine (1, 51) according to claim 1, wherein the coolant outlet (43) is attached in a radial boundary (424) of the hollow cylindrical chamber (42).

4. Electrical machine (1, 51) according to one of the preceding claims,
- wherein the rotor (4) comprises a laminated core (16) of a first material and an integrally cast short-circuiting ring (17) of a second material which has a specific thermal conductivity that is greater than a specific thermal conductivity of the first material,
- wherein the integrally cast short-circuiting ring (17) has a fixing area (18) which is directly attached to the shaft (5).

5. Electrical machine (1, 51) according to one of the preceding claims,
- wherein the leakage chamber (25) is at least partially bounded by a radial surface (26) of the shaft,
- wherein a slinger disk (28) is provided on the radial surface (26) of the shaft.

6. Electrical machine (1, 51) according to one of the preceding claims, wherein the seal (27) is disposed on the shaft (5) such that the cooling liquid (15) can act on a surface of the seal (27) facing the cooling liquid (15) to reduce the ingress of the residual leakage.

7. Cooling system (50), comprising an electrical machine (1, 51) according to one of claims 1 to 6 and a coolant circuit (55) for transporting the cooling liquid (15) through the axial bore (6).

8. Vehicle (61), comprising a cooling system (50) according to claim 7.

## Revendications

1. Machine (1, 51) électrique, notamment machine asynchrone, comprenant
- un stator (2),
- un rotor (4), qui est monté tournant autour d'un axe (3) de rotation et qui, lorsque la machine (1, 51) électrique est en fonctionnement, coopère magnétiquement avec le stator (2),
- un arbre (5), sur lequel le rotor (4) est fixé et qui a un alésage (6) axial,
- un élément (7, 47) d'afflux, qui s'étend dans l'alésage (6) axial de manière à ce qu'un liquide (15 ) de refroidissement puisse s'écouler de l'élément (7, 47) d'afflux dans l'alésage (6) axial,
- dans laquelle l'élément (7, 47) d'afflux a un tuyau (9) d'entrée, qui s'étend dans l'alésage (6) axial,
- dans laquelle le liquide (15) peut s'écouler dans le tuyau (9) d'entrée en passant par une entrée (34, 44) de fluide de refroidissement,
- dans laquelle une extrémité fermée de l'alésage (6) axial a un élément (13) de transmission, qui a d'un côté tourné vers l'élément (7, 47) afflux un évidement (14) pour dévier le liquide (15) de refroidissement,
- dans laquelle, par la bordure (12) de l'alésage (6) axial et par la surface (10) extérieure du tuyau (9) d'entrée, il est formé un conduit (31) de forme cylindrique, dans lequel le liquide (15) de refroidissement s'écoule après la déviation,
- dans laquelle la machine (1, 51) électrique comprend un espace (32, 42) en forme de cylindre creux, qui est disposé à un bout ouvert de l'arbre (5) de manière à ce que le liquide (15) de refroidissement puisse s'écouler de l'alésage (6) axial dans l'espace (32, 42) et l'espace (32, 42) est délimité du côté opposé à l'alésage (6) axial dans la direction axiale par une bordure (320, 420) axiale,
- dans laquelle sur l'arbre (5) sont disposés un joint (27) et une chambre (25) de fuite, de manière à ce que le joint (27) puisse empêcher le liquide (15) de refroidissement d'entrer dans la chambre (125) de fuite, à l'exception d'un reste de fuite,
**caractérisée en ce que** la bordure (320, 420) axiale rend possible une conduite en forme de spirale du liquide (15) de refroidissement autour de l'axe (3) de rotation de la partie (321, 421), disposée près de l'arbre (5) axialement, de la bordure (320, 420) axiale à la partie (322, 422), disposée loin de l'arbre (5) axialement, de la bordure (320, 420) axiale, afin de conduire le liquide (15) de refroidissement à une sortie (33, 43) de fluide de refroidissement de la machine électrique.

2. Machine (1, 51) électrique suivant la revendication 1, dans laquelle la sortie (33) de fluide de refroidissement s'étend dans l'espace (32) en forme de cylindre creux par une entaille d'une bordure (324) radiale de l'espace (32) en forme de cylindre creux.

3. Machine (1, 51) électrique suivant la revendication 1, dans laquelle la sortie (43) de fluide de refroidissement est mise dans une bordure (424) radiale de l'espace (42) en forme de cylindre creux.

4. Machine (1, 51) électrique suivant l'une des revendications précédentes,
- dans laquelle le rotor (4) comprend un paquet (16) de tôles en un premier matériau et un anneau (17) de court-circuit coulé en un deuxième matériau, qui a une conductibilité thermique spécifique plus grande qu'une conductibilité thermique spécifique du premier matériau,
- dans laquelle l'anneau (17) de court-circuit coulé a une partie (18) de fixation, qui est jointe directement à l'arbre (5).

5. Machine (1, 51) électrique suivant l'une des revendications précédentes,
- dans laquelle la chambre (25) de fuite est bordée, au moins en partie, par une surface (26) radiale de l'arbre,
- dans laquelle, sur la surface (26) radiale de l'arbre, il y a un disque (28) de centrifugation.

6. Machine (1, 51) électrique suivant l'une des revendications précédentes, dans laquelle le joint (27) est monté sur l'arbre (5), de manière à ce que le liquide de refroidissement puisse, pour diminuer le reste de fuite qui entre, agir sur une surface, tournée vers le liquide de refroidissement, du joint (27),

7. Système (50) de refroidissement, comprenant une machine (1, 51) électrique suivant l'une des revendications 1 à 6 et un circuit (55) de fluide de refroidissement pour transporter le liquide (15) de refroidissement dans l'alésage (6) axial.

8. Véhicule (61), comprenant un système (50) de refroidissement suivant la revendication 7,
